Europäisches Patentamt

European Patent Office

Office européen des brevets

(11) Publication number: **0 186 272**
**B1**

## (12) EUROPEAN PATENT SPECIFICATION

(45) Date of publication of patent specification: **20.07.88**

(51) Int. Cl.⁴: **F 16 B 7/04**

(21) Application number: **85307441.7**

(22) Date of filing: **16.10.85**

(54) Joint structure for a structural bar assembly.

(30) Priority: **18.10.84 JP 157664/84**
**06.11.84 JP 168210/84**

(43) Date of publication of application:
**02.07.86 Bulletin 86/27**

(45) Publication of the grant of the patent:
**20.07.88 Bulletin 88/29**

(84) Designated Contracting States:
**AT BE CH DE FR GB IT LI LU NL SE**

(56) References cited:
**EP-A-0 006 322**
**EP-A-0 045 019**
**DE-U-1 975 374**
**DE-U-8 202 245**
**FR-A-2 094 992**
**FR-A-2 165 045**
**FR-A-2 432 638**
**US-A-3 502 292**
**US-A-3 867 045**
**US-A-4 108 563**

(73) Proprietor: **Keiichiro, Yamazaki**
**No. 12-1, 6-chome Kameido Koutou-Ku**
**Tokyo-to (JP)**

(72) Inventor: **Keiichiro, Yamazaki**
**No. 12-1, 6-chome Kameido Koutou-Ku**
**Tokyo-to (JP)**

(74) Representative: **Jones, Colin et al**
**W.P. THOMPSON & CO. Coopers Building**
**Church Street**
**Liverpool L1 3AB (GB)**

Courier Press, Leamington Spa, England.

## Description

The present invention relates to a joint structure of a bar assembly used, for example, in civil engineering and construction.

Such a structural bar assembly comprises a first bar disposed, for example, horizontally and a second bar disposed crosswise to the first bar, for example, vertically with the bars joined to each other where they cross one another. The bar assembly may be attached to houses and buildings inside or outside thereof, or be installed around housing sites, buildings, parks, athletics grounds, workshops and the like, or be installed along roads, ponds, lakes, rivers and the like. More particularly, the constructional bar assembly may be a kind of railing, such as a window railing, a stair railing, a balcony railing, a bridge railing or the like, a kind of a lattice, such as a window lattice, a lattice door, a partition lattice or the like, or a kind of fence or paling for partitioning or protecting house plots, pastures, farms, flower beds, gardens, lawns, parks, roads, rivers, ponds, lakes or the like.

In the prior art, the first bar and the second bar are joined or assembled by using conventional fixing members, such as set screws bolts or rivets, so that much labour and skilful workers are required for assembling, and it is difficult to decrease the total assembling cost.

Also, joint structures typically comprise a first bar and a hollow second bar, to be joined to each other, wherein a slot is formed in the second bar to receive a portion of the first bar.

In US—A—3002582, US—A—3345730 and US—A—4406048 there are proposed press-fixing methods, wherein a joint portion or tenon of the first bar is fitted or inserted into a through slot or mortice formed on the second bar, and then the joint portion is transformed by strongly pressing or hammering so that it is flat and cannot slip out from the through slot.

However, although such method does not incur the additional material cost for fixing members, such as screws and rivets, or much labour for assembling operations, it causes the joint portions to corrode or rust and be subject to erosion, as plating and paint layers on the joint portions are largely and severely damaged by a strong pressing or hammering process.

Also, DE—U—1975374 discloses a joint structure that involves press-fixing first and second bars together, wherein slots are provided in the side of a first bar for receiving tabs at the end of a second bar. The ends of the tabs are bent such that, when the two bars are assembled together as required, the bent tabs having passed through the slots abut the internal surface of the first bar and provide a locked connection between the two.

It is an object of the present invention to provide a joint structure for a constructional bar assembly which is less subject to rusting or corrosion at its joint portions so that a sufficient joint strength can be maintained for a relatively longer period of time.

Another object of the present invention is to provide a joint structure for bar assembly which does not require so much labour and material cost for fixing members.

A feature of the present invention is that a first bar and a second bar are assembled only by inserting or fitting operations without strongly hammering or pressing surfaces of joint portions and also without using costly fixing members, such as rivets, set screws or bolts.

In accordance with the present invention there is provided a joint structure for a structural bar assembly, characterised in that a web is formed longitudinally on a rear wall of the first bar, the slot being formed transversely on a front wall of the second bar, which is tubular, and in that an inclined stop plate is formed on the portion of said web by cutting and bending operations, said stop plate being acclivitous towards the rear wall of said first bar, an edge portion of the slot or the stop plate being deformed or bent so as to allow the stop plate to pass through the slot when the web portion is fitted into the slot, and a top end of the inclined stop plate being engaged or contacted with an inner surface of the front wall of the second bar after the stop plate has passed through the slot.

The present invention is further described by way of example only with reference to the accompanying drawing in which:—

Figure 1 is a perspective view of a first bar and a second bar before assembly, and shows one embodiment of the present invention;

Figure 2 is a perspective view of the first bar and the second bar of Figure 1 after assembly;

Figure 3 is a sectional view taken along a line A—A of Figure 2;

Figure 4 is a sectional view of assembled first and second bars, and shows another embodiment of the present invention, wherein a top end of a web portion is contacted with a rear wall of the second bar;

Figure 5 is a sectional view of assembled first and second bars, and shows a further embodiment of the present invention, wherein a tool is inserted into a second bar for deflecting a stop plate;

Figure 6 is a perspective view of a first bar and a second bar before assembling, and shows another embodiment of the present invention.

Figure 7 is a perspective view of the first and the second bar of Figure 6 after assembly;

Figure 8 is a sectional view taken along line B—B of Figure 7;

Figure 9 is a plan view of assembled first and second bars, and shows a further other embodiment of the present invention, wherein a stop plate contacts with side walls of the second bar;

Figure 10 is a sectional view of assembled first and second bars, and shows a further embodiment of the present invention, wherein a tool is inserted into the second bar for deflecting a stop plate;

Figures 11 to 15 are right hand end view of first bars of different embodiments of the present invention;

Figures 16 to 19 are cross sectional views of second bars of further different embodiments of the present invention;

Figure 20 is a plan view of a first bar of a further embodiment of the present invention;

Figure 21 is a sectional view of the first bar taken along line C—C of Figure 20;

Figure 22 is a sectional view of the first bar taken along line D—D of Figure 20;

Figure 23 is a plan view of a first bar of another embodiment of the present invention;

Figure 24 is a sectional view of the first bar taken along line E—E of Figure 23;

Figure 25 is a sectional view of the first bar taken along line F—F of Figure 23;

Figure 26 is a sectional view of unassembled first and second bars of another embodiment of the present invention; and

Figure 27 is a sectional view of assembled first and second bars of a further embodiment of the present invention.

In the various different embodiments of the invention as illustrated in the drawings, like parts are denoted by like reference numerals.

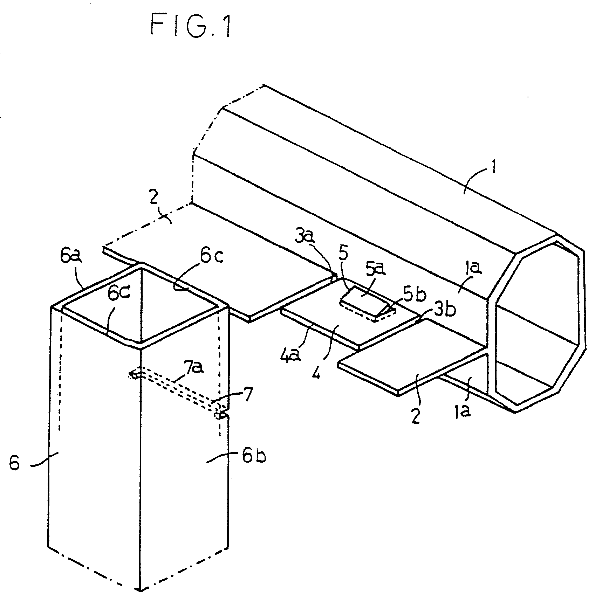

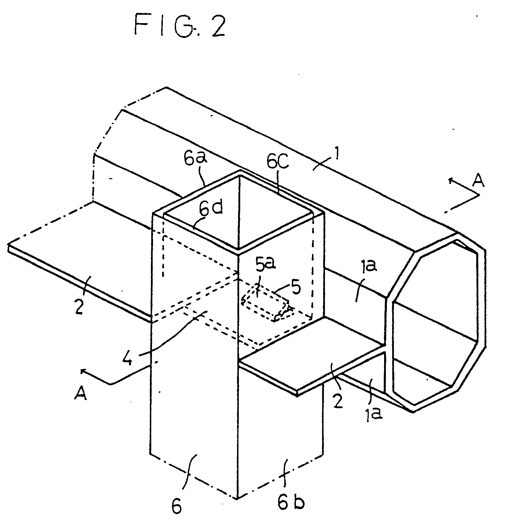

Referring to Figures 1 to 3 which show one preferable embodiment of the present invention, a joint structure is formed between a tubular first bar 1 and a tubular second bar 6 crossing over the first bar. A web 2 is formed on a rear wall 1a of the first bar 1 over the full length of the first bar. The web 2 is located at a centre position of the rear wall 1a. A pair of transverse slits 3a, 3b are formed in the web 2 at a spacing which is substantially equal to the full width of the second bar 6. An inclined stop plate 5 is formed on a web portion 4 defined between the slits 3a, 3b. The stop plate 5 is acclivitous towards said rear wall 1a, namely, it is upwardly inclined in a direction from a rear end 4a of the web portion 4 to the rear wall 1a of the first bar 1. A through slot 7 is transversely formed in a front wall 6c of the second bar 6 across the full width of the second bar 6.

In the case of the above embodiment, the first bar 1 and the second bar 6 are assembled crosswise by fitting or inserting the web portion 4 acting as a tenon, into the slot 7 acting as a mortice with the left and right hand side walls 6a, 6b contacting the edges of the left and right hand slits 3a, 3b. Upon this fitting operation, as a traversely extending edge 7a of the slot 7 slidably contacts an inclined surface 5a of the stop plate 5, the stop plate 5 is elastically transformed or bent downwardly so as to pass through the slot 7.

When the front wall 6c of the second bar 6 comes into contact with the rear wall 1a of the first bar 1, the stop plate 5 has completely passed through the slot 7, and is at once elastically restored to its upwardly inclined state. In this way, as the top end 5b of the stop plate 5 comes into contact with an inner surface of the front wall of the second bar 6, the stop plate 5 is prevented from slipping out from the slot 7. Namely, the second bar 6 is prevented from moving forwards and rearwards in relation to the first bar 1. Also, as the edges of said slits 3a, 3b of the web 2 contact the side walls 6a, 6b of the second bar 6, the second bar 6 is prevented from moving right and left against the first bar 1. Furthermore, the second bar 6 is prevented from moving upwards and downwards, as the web portion 4 of the first bar 1 is engaged with the slot 7 of the second bar 6. Thus, the first bar 1 and the second bar 6 are firmly joined together and kept in a proper assembled state for a long period of time.

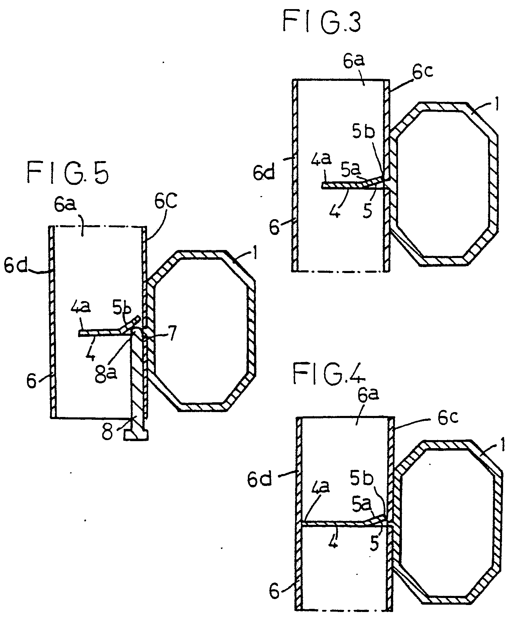

In case of another embodiment as shown in Figure 4, the rear end 4a of the web portion 4 contacts the inner surface of a rear wall 6d of the second bar 4 to provide more firmly joined bar assembly.

In a case of another embodiment as shown in Figure 5, an instrument or tool 8 is additionally used for restoring the stop plate 5 of the first bar 1, if the stop plate 5 does not restore elastically at all or restores incompletely owing to the nature of the material and the quality of the web 2 of the first bar 1. After the stop plate 5 has passed through the slot 7 of the second bar 6, the tool 8 is inserted longitudinally into the second bar 6, and a head 8a of the tool 8 pushes the stop plate 5 upwardly so that the latter protrudes slantingly from the web portion 4. In this way, as the top end 5b of the slanted stop plate 5 engages with the inner surface of the rear wall 6c of the second bar 6, the stop plate 5 is prevented from slipping out from the slot 7.

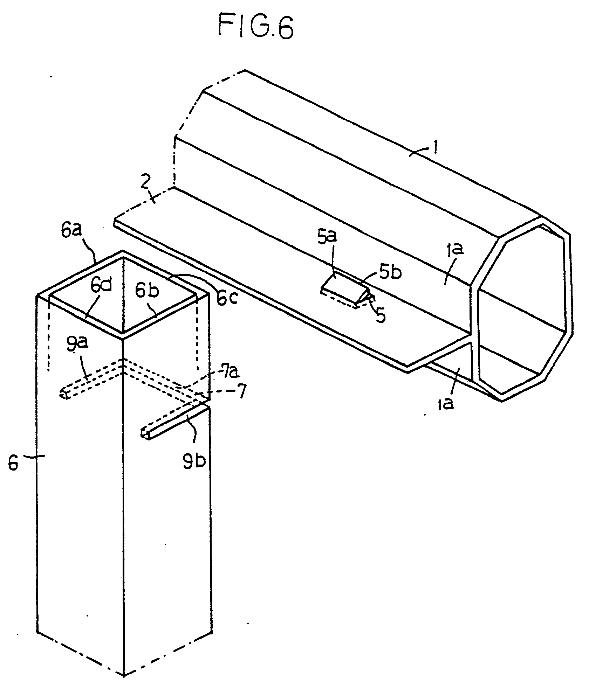

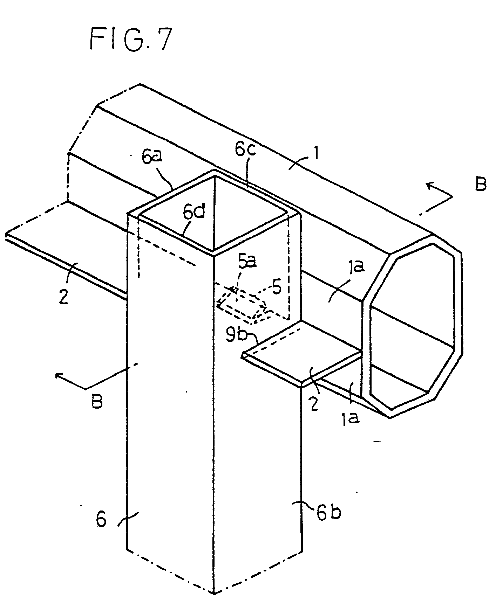

In the case of the embodiment shown in Figures 6 to 8, the web 2 is longitudinally formed on the rear wall 1a of the first bar 1, and the web 2 does not have transverse slits for receiving the side walls 6a, 6b of the second bar 6. On the other hand, the transverse slot 7 is formed across the full width of the front wall 6c of the second bar 6, and elongated side slits 9a, 9b are formed in side walls 6a, 6b of the second bar 6. The side slits 9a, 9b communicate with the slot 7 and extend to a centre portion of the side walls 6a, 6b for receiving the web 2.

In this embodiment, the first bar 1 and the second bar 6 are assembled crosswise by fitting or inserting the stop plate 5 of the web 2 into the slot 7 of the second bar 6 with the web 2 contacting the edges of said side slits 9a, 9b. During such fitting operation, as the traversely extending edge 7a of the slot 7 slidably pushes the inclined surface 5a of the stop plate 5, the plate 5 is elastically deformed or bent downwardly so as to pass through the slot 7. When the front wall 6c of the second bar 6 comes into contact with the rear wall 1a of the first bar 1, the stop plate 5 has completely passed through the slot 7, and is at once elastically restored to an upwardly inclined state.

In this way, as the rear end 5b of the stop plate 5 comes into contact with an inner surface of the front wall 6c, the stop plate 5 is prevented from slipping out from the slot 7. Namely, the second bar 6 is prevented from moving forwards and rearwards in relation to the first bar 1. Also, the second bar 6 is prevented from moving upwards and downwards because the web portion 4 of the first bar 1 engages the side slits 9a, 9b of the second bar 6.

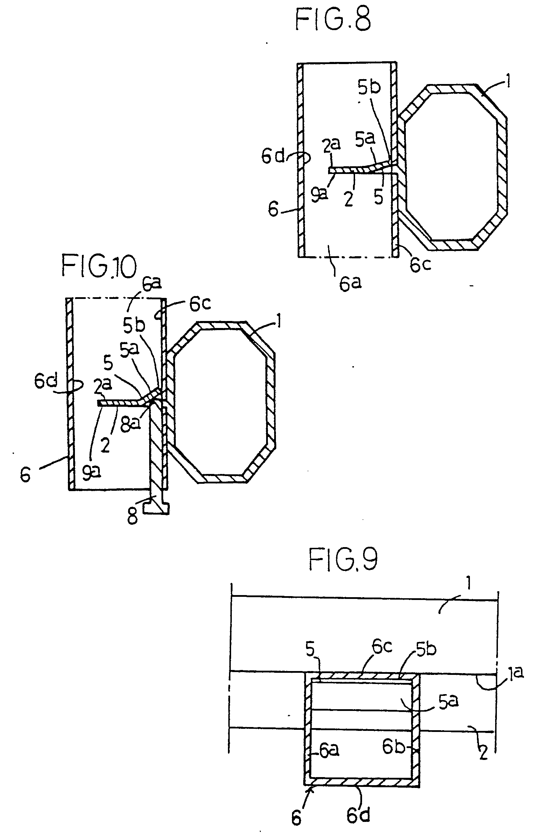

In the case of the further embodiment shown in Figure 9, in addition to the above arrangement, the width of the stop plate 5 of the first bar 1 is almost equal to that of the front wall 6c of the second bar 6, so that the stop plate 5 can contact the inner surface of the side walls 6a, 6b of the second bar 6. Therefore, the second bar 6 is further prevented from moving sideways against the first bar 1, and a more firmly joined bar assembly is obtained.

In the case of the embodiment shown in Figure 10, an instrument or tool 8 is additionally used for restoring the stop plate 5 of the first bar 1, if the stop plate 5 does not restore elastically at all or restores incompletely owing to the nature of the material of the web 2 of the first bar 1. After the web 2 is fitted into the pair of side slits 9a, 9b completely and the stop plate 5 passes through the slot 7 of the second bar 6, the tool 8 is inserted longitudinally into the second bar 6, and the head 8a of the tool 8 pushes the stop plate 5 upwardly so as to be bent slantingly from the web portion 4. In this way, as the rear end 5b of the slanted stop plate 5 engages the inner surface of the rear wall 6c of the second bar 6, the stop plate 5 is prevented from slipping out of the slot 7.

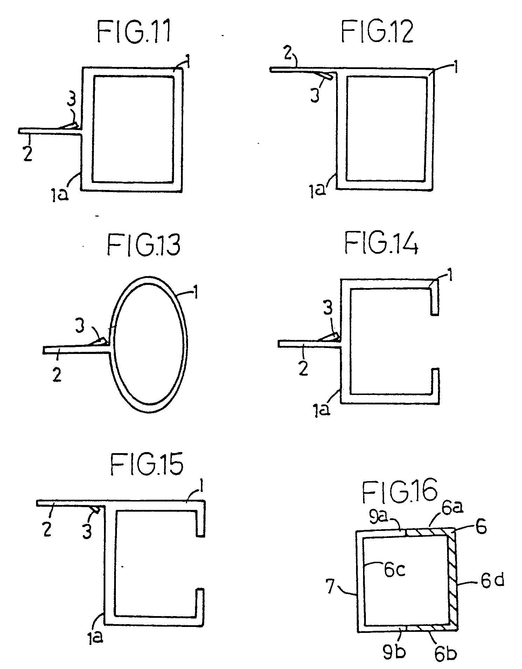

In the embodiment shown in Figure 11, the first bar 1 is made of a square tube, and the web 2 is formed on a central portion of a rear wall 1a at right angles thereto. In an embodiment shown in Figure 12, the first bar 1 is made of a square tube, and the web 2 is formed on an edge portion of the rear wall 1a at right angles thereto. In the embodiment shown in Figure 13, the first bar 1 is made of an elliptical tube, and the web 2 is formed on a central portion thereof. In the embodiment shown in Figure 14, the first bar 1 is made of a channel member which is cut out at a central portion of a front wall longitudinally, and the web 2 is formed on a central portion of the rear wall 1a. In the embodiment shown in Figure 15, the first bar 1 is made of a channel member, and the web 2 is formed on an edge portion of the rear wall 1a at right angles thereto.

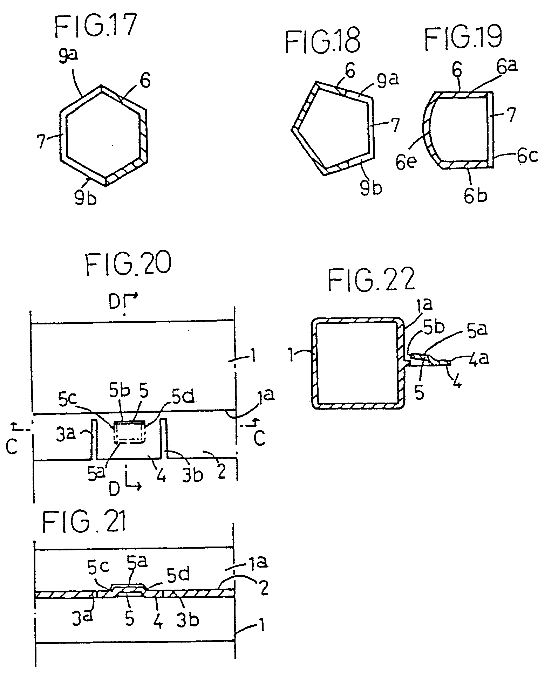

In the embodiment shown in Figure 16, the second bar 6 is made of a square tube, and the pair of side slits 9a, 9b communicating with the slot 7 are formed in side walls 6a, 6b. In the embodiment shown in Figure 17, the second bar 6 is made of a hexagonal tube, and the pair of side slits 9a, 9b are formed so as to communicate with the slot 7. In the embodiment shown in Figure 18, the second bar 6 is made of a pentagonal tube, and the pair of side slits 9a, 9b and the slot 7 are formed to communicate with each other. In the embodiment shown in Figure 19, the second bar 6 is made of a square tube which has a curved rear wall 6d, and the slot 7 is formed in a flat front wall 6c thereof.

In the embodiment shown in Figures 20 to 22, the first bar 1 is made of a square tube, and a pair of slits 3a, 3b is formed in the web 2. Although a rectangular stop plate 5 is cut away and separated from the web 2 at a side near to a rear wall 1a of the first bar 1 so as to form a rear end 5b, a lefthand side 5c and a righthand side 5d of the stop plate 5 are not separated from the web 2, so that the stop plate 5 is very strong against a bending or buckling load. In this way, a firm joint structure of bar assembly can be provided.

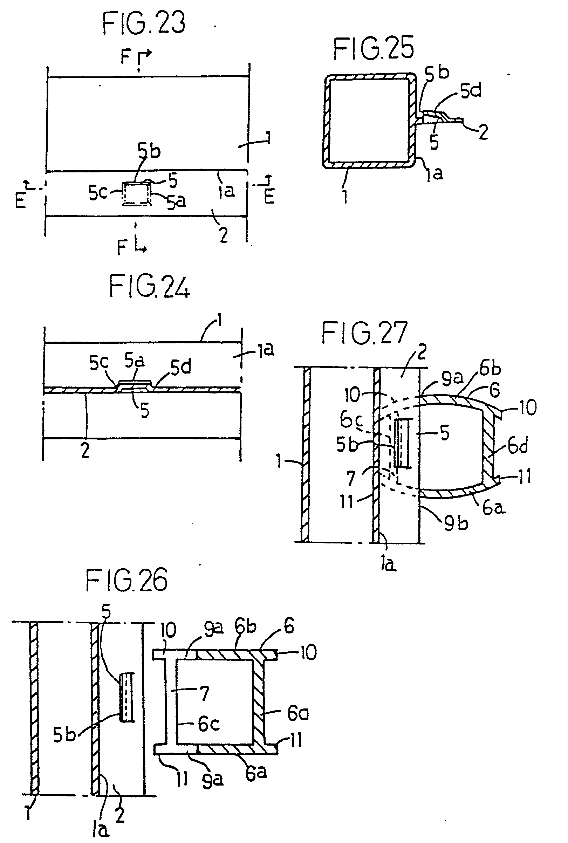

In the embodiment shown in Figures 23 to 25, the first bar 1 is made of a square tube, but no pair of slits is formed in the web 2. Although the rectangular stop plate 5 is cut from the web 2 at a side near to a rear wall 1a of the first bar 1 in order to form a rear end 5b, the lefthand side 5c and the righthand side 5d of the stop plate 5 are not separated from the web 2. Therefore, the stop plate 5 has a high resistance against a bending or buckling stress, and a more firmly joined bar assembly can be provided. In the above embodiments shown in Figures 20 and 23, edge portions of the slot of the second bar may be elastically deformed or bent alone so as to allow the stop plate 5 to pass through the slot, otherwise the edge portions may be elastically deformed or bent as well as the stop plate 5.

In the embodiment shown in Figure 26, the second bar 6 has a pair of projections 10, 11 on both edges of the front wall 6c and the rear wall 6d at right angles thereto. The projections 10, 11 formed on the front wall 6c contact the rear wall 1a of the first bar 1 when the first bar 1 and the second bar 6 are completely assembled.

In the embodiment shown in Figure 27, the second bar 6 has curved side walls 6a, 6b, and a pair of projections 10, 11 are formed on both edges of the front wall 6c. The projections 10, 11 formed on the front wall 6c contact the rear wall 1a of the first bar 1 when the first bar 1 and the second bar 6 are completely assembled.

It should be noted that the present invention is not restricted to the above-mentioned embodiments and the drawings with regard to cross sectional shapes of the first bar and the second bar, the shapes of the web and of the stop plate, the numbers of webs and stop plates, the shapes of the slot and the slits, and the numbers of slots and the slits.

As described above, in the case of the joint structure of the present invention, the first bar 1 and the second bar 6 are assembled by inserting or fitting the web 2 of the first bar 1 into the transverse slot 7 of the second bar 6, and by restoring the stop plate 5 elastically or forcibly to an inclined or contact the inner surface of the front wall of the second bar 6 after the stop plate 5 passes through the slot 7. Namely, because joint portions of the first bar 1 and the second bar 6 are not pressed of struck strongly, there is little fear of rusting or eroding in the joint portions owing to injury of a plating or paint layer, so that a sufficient joint strength can be maintained for a long period of time.

Also, the first bar 1 and the second bar 6 are joined to each other only by inserting or fitting operations without using costly fixing members, such as rivets, bolts or set screws, the joint structure of the present invention does not require so much labour and the total assembly costs can be decreased.

Although the first, and second bars 1 and 6 are shown arising at right angles to one another, they could be at any angle, the slot in the second tubular member being suitably skewed.

**Claims**

1. A joint structure for a structural bar assembly comprising a first bar (1) and a hollow second bar (6) to be crosswise or slantingly joined to each other, wherein a slot (7) is formed in the second bar to receive a portion (4) of the first bar, characterised in that a web (2) is formed longitudinally on a rear wall (1a) of the first bar (1), the slot (7) being formed transversely on a front wall of the second bar (6), which is tubular, and in that an inclined stop plate (5) formed on the portion (4) of said web (2) by cutting and bending operations, said stop plate being acclivitous towards the rear wall (1a) of said first bar (1), an edge portion of the slot (7) or the stop plate (5) being deformed or bent so as to allow the stop plate to pass through the slot when the web portion (4) is fitted into the slot, and a top end of the inclined stop plate (5) being engaged or contacted with an inner surface of the front wall (6c) of the second bar (6) after the stop plate has passed through the slot.

2. A joint structure as claimed in claim 1, wherein the stop plate (5) is forcibly restored to a sufficiently inclined state by pushing the stop plate by means of a tool (8) driven longitudinally in the second bar.

3. A joint structure as claimed in claims 1 or 2, wherein a pair of transverse slits (3a, 3b) is formed in the web (2) of the first bar (1) at a spacing substantially equal to the width of the second bar (6), the stop plate (5) being formed on a web portion (4) between the transverse slits, side walls (6a, 6b) of the second bar (6) being fitted into the transverse slits when the stop plate is inserted through the slot (7) in the front wall of the second bar.

4. A joint structure as claimed in claim 1 or 2, wherein slits (9a, 9b) are formed in side walls (6a, 6b) of the second bar to receive the web (2) on the first bar (1).

5. A joint structure as claimed in any preceding claim, wherein the front wall (6c) of the second bar (6) abuts the rear wall (1a) of the first bar (1).

6. A joint structure as claimed in any preceding claim, wherein the first bar (1) is also tubular.

**Patentansprüche**

1. Verbindungsvorrichtung für eine Profilstabanordnung, die einen ersten Stab (1) und einen hohlen zweiten Stab (6) umfasst, die senkrecht zueinander oder geneigt zueinander verbunden werden sollen, wobei ein Schlitz (7) im zweiten Stab gebildet ist, um einen Abschnitt (4) des ersten Stabes aufzunehmen, dadurch gekennzeichnet, dass ein Steg (2) in Längsrichtung auf einer Rückwand (1a) des ersten Stabes (1) verläuft, dass der Schlitz (7) in Querrichtung an der Vorderwand des zweiten Stabes (6) verläuft, der rohrärtig ausgebildet ist, und dass eine geneigte Anschlagplatte (5) an dem Abschnitt (4) des Stegs (2) durch Schneid- und Biegevorgänge ausgebildet ist, dass die Anschlagplatte gegen die Rückwand (1a) des ersten Stabes (1) hin ansteigt, das ein Randabschnitt des Schlitzes (7) oder der Anschlagplatte (5) derart verformt oder gebogen ist, dass er ein Hindurchtreten der Anschlagplatte durch den Schlitz gestattet, wenn der Stegabschnitt (4) in den Schlitz eingepasst wird, und dass ein oberes Ende der geneigten Anschlagplatte (5) in Eingriff oder in Anlage mit einer Innenfläche der Vorderwand (6c) des zweiten Stabes (6) steht, nachdem die Anschlagplatte durch den Schlitz hindurchgetreten ist.

2. Verbindungsvorrichtung nach Anspruch 1, dadurch gekennzeichnet, dass die Anschlagplatte (5) unter Kraftausübung in eine ausreichend geneigte Lage zurückgebracht wird, indem die Anschlagplatte mittels eines in Längsrichtung in den zweiten Stab getriebenen Werkzeugs (8) gedrückt wird.

3. Verbindungsvorrichtung nach den Ansprüchen 1 und 2, dadurch gekennzeichnet, dass ein Paar querverlaufender Schlitze (3a, 3b) im Steg (2) des ersten Stabes (1) mit einem gegenseitigen Abstand voneinander gebildet wird, der im wesentlichen gleich der Breite des zweiten Stabes (6) ist, dass die Anschlagplatte (5) an dem Stegabschnitt (4) zwischen den querverlaufenden Schlitzen gebildet wird, und dass die Seitenwände (6a, 6b) des zweiten Stabes (6) in die querverlaufenden Schlitze eingesetzt werden, wenn die Anschlagplatte durch den Schlitz (7) in der Vorderwand des zweiten Stabes eingesetzt wird.

4. Verbindungsvorrichtung nach Anspruch 1 oder 2, dadurch gekennzeichnet, dass die Schlitze (9a, 9b) in den Seitenwänden (6a, 6b) des zweite Stabes gebildet werden, um den Steg (2) am ersten Stab (1) aufzunehmen.

5. Verbindungsvorrichtung nach einem der vorausgehenden Ansprüche, dadurch gekennzeichnet, dass die Vorderwand (6c) des zweiten Stabes (6) an der Rückwand (1a) des ersten Stabes (1) anliegt.

6. Verbindungsvorrichtung nach einem der vorausgehenden Ansprüche, dadurch gekennzeichnet, dass der ereste Stab (1) ebenfalls rohrartig ausgebildet ist.

**Revendications**

1. Structure de jonction pour un assemblage structurel de barres comprenant une première barre (1) et une deuxième barre creuse (6) à relier l'une à l'autre en croix ou obliquement, dans laquelle une vente (7) est ménagée dans la deuxième barre pour recevoir une portion (4) de la première barre, caractérisée en ce qu'une aille (2) est prévue longitudinalement sur une paroi arrière (1a) de la première barre (1), la fente (7) étant formée transversalement sur une paroi avant de la deuxième barre (6), qui est tubulaire, et en ce qu'une plaque d'arrêt inclinée (5) est formée sur la portion (4) de ladite aile (2) par des opérations de coupe et de pliage, ladite plaque d'arrêt étant inclinée vers la paroi arrière (1a) de ladite première barre (1), une région de bord de la fente (7) ou de la plaque d'arrêt (5) étant déformée ou pliée afin de permettre le passage de la plaque d'arrêt à travers la fente lorsque la portion d'aile (4) est insérée dans la fente, et une extrémité supérieure de la plaque d'arrêt inclinée (5) étant en engagement ou en contact avec une surface intérieure de la paroi avant (6c) de la deuxième barre (6) après passage de la plaque d'arrêt à travers la fente.

2. Structure de jonction suivant la revendication 1, dans laquelle la plaque d'arrêt (5) est ramenée de force à un état suffisamment incliné, par poussée sur la plaque d'arrêt au moyen d'un outil (8) enfoncé longitudinalement dans la deuxième barre.

3. Structure de jonction suivant la revendication 1 ou 2, dans laquelle deux fentes secondaires transversales (3a, 3b) sont ménagées dans l'aile (2) de la première barre (1) à un espacement sensiblement égal à la largeur de la deuxième barre (6), la plaque d'arrêt (5) étant formée sur une portion d'aile (4) entre les fentes transversales, les parois latérales (6a, 6b) de la deuxième barre (6) se logeant dans les fentes transversales lorsqu'on insère la plaque d'arrêt à travers la fente (7) dans la paroi avant de la deuxième barre.

4. Structure de jonction suivant la revendication 1 ou 2, dans laquelle des fentes secondaires (9a, 9b) sont formées dans les parois latérales (6a, 6b) de la deuxième barre, pour recevoir l'aile (2) de la première barre (1).

5. Structure de jonction suivant l'une quelconque des revendications précédentes, dans laquelle la paroi avant (6c) de la deuxième barre (6) est en butée contre la paroi arrière (1a) de la première barre (1).

6. Structure de jonction suivant l'une quelconque des revendications précédentes, dans laquelle la première barre (1) est également tubulaire.

FIG.1

# FIG. 2

# FIG.3

# FIG.5

# FIG.4

# FIG.6

FIG.7

# FIG.8

# FIG.10

# FIG.9

FIG.11

FIG.12

FIG.13

FIG.14

FIG.15

FIG.16

FIG.17

FIG.18    FIG.19

FIG.20

FIG.22

FIG.21

FIG.23

FIG.25

FIG.24

FIG.27

FIG.26